# EUROPEAN PATENT SPECIFICATION

(11) **EP 3 304 228 B1**
(45) Date of publication and mention of the grant of the patent: **10.08.2022**
(21) Application number: 15727620.5
(22) Date of filing: 01.06.2015
(51) Int. Cl.: G05B 19/418, B25J 9/16

(54) **ROBOT SYSTEM FOR SYNCHRONIZING THE MOVEMENT OF THE ROBOT ARM**
ROBOTERSYSTEM ZUR SYNCHRONISIERUNG DER BEWEGUNG DES ROBOTERARMS
SYSTÈME DE ROBOT POUR SYNCHRONISER LE MOUVEMENT D'UN BRAS DE ROBOT

(43) Date of publication of application: 11.04.2018
(73) Proprietor: ABB Schweiz AG, 5400 Baden (CH)
(72) Inventor: DAI, Fan, 64673 Zwingenberg (DE); VILACOBA, Diego, E-08192 Sant Quirze del Vallés (Barcelona) (ES)
(74) Representative: Beetz & Partner mbB
(86) International application number: PCT/EP2015/062087
(87) International publication number: WO 2016/192768

(56) References cited:
- EP-A2- 1 801 680
- JP-A- S59 160 209
- US-A1- 2005 256 606
- US-A1- 2009 216 375

## Description

The invention is related to a robot system, comprising a robot arm with a moveable tip and at least two degrees of freedom in movement and a robot controller which is foreseen to control the movement of the tip of the robot arm along a predetermined movement path in between a start- and an end- position.

It is known that industrial robots are widely used in industrial production such as welding, press automation or handling. A typical robot comprises a robot arm with for example 5, 6 or 7 members which are connected by respective joints in a slewable or rotatable manner at their respective ends so that a respective number of degrees of freedom in movement is gained. Each joint of the robot arm is typically driven by a dedicated servo motor wherein the position of the tip of the robot arm depends on the joint angles. A related robot controller normally comprises a computing device with a robot program running thereon containing a desired trajectory respectively movement path and a related movement speed of the tip of the robot arm. In many cases a tool such as a gripper is foreseen at the tip of the robot arm, so that the robot program basically describes the related movement path and movement velocity of a reference point of the tool, the so far called tool center point (TCP).

The robot controller is foreseen to generate control signals for the servo motors of each joint so that the desired movement of the tip of the robot arm respectively the tool center point (TCP) is executed according to the data within the robot program.

Typically motion instructions of a robot program are specified in a programming language that is being interpreted during its execution by the robot controller. In this way, the motion trajectory is calculated on-line, taking the motion targets respectively coordinates of the movement path that are specified in the robot program as input. However, in many applications, industrial robots are intended to repeat pre-planned motion trajectories, which are optimized (off-line) before running it in the desired application. With the on-line trajectory calculation capability of today's industrial robot controllers, results of off-line optimization are converted to motion targets, and the actual trajectory is calculated on-line during execution of the robot program.

In many cases a robot does not execute an independent standalone application, moreover the movement of a robot arm has to be synchronized with for example the movement of another collaborating production device such as a press or another robot which can be seen as master device. US 2009/0216375 Aldiscloses such a robot system according to the preamble of claim 1. In this robot system a controller controls the movement of a robot based on position feedback on the current position of the robot. It further compares a current position of a machine part that cooperates with the robot to an expected position associated to the current position of the robot, and generates a signal to slow down or stop the motion of the machine part when the actual position of the machine part is ahead of the expected position.

The objective of the invention is to provide a robot system which facilitates synchronized movement of a robot and of a device having an external movement axis.

The objective is attained by a robot system as defined in claim 1.

The basic idea of the invention consists in using an external axis of a master device as master axis of robot motion control. Hereby an offline optimized trajectory respectively movement path with explicitly defined master-slave relationship to the control signal is used to generate the desired robot joint positions and the desired robot movement therewith online.

According to the invention the movement of the robot arm along the predetermined trajectory respectively movement path is directly dependent on the actual value of the control signal at the input means, represents the current position of the external master axis. Thus, in case of a slowing down or speeding up the devolution of the control signal representing the position of the master axis, the speed of the robot movement will be in a direct relationship thereto so that external master axis and movement of the robot are fully synchronized.

A predetermined trajectory respectively the movement path can be generated with any software tools, but can also be generated offline with a virtual robot controller. A predetermined trajectory is preferably optimized for the normal operation and considers also conditions like operation under maximum speed of master axis or speed variations.

The control signal itself could be as well represented by a digital signal with respective data values as also by an analogous voltage signal or the like. The control signal represents values in between a first and a second signal limit.

The predetermined trajectory as a function of master axis position is used in online operation on the robot controller to generate desired robot positions (TCP and/or joint values, velocity and acceleration) for robot servo motor control. Desired robot positions are created based on the master axis position, which might become fed from an external sensor (e.g. encoder), motion control (e.g. machine control PLC) or a source for generating a control signal according to a mathematical function such as a sinusoidal course.

In case that the course of the control signal is so dynamic that the specified maximum robot speed is reached or exceeded, a signal might be provided, indicating that the synchronization will be lost. Thus it is possible to configure the action to be taken when the specified maximum robot speed is reached or a change of master axis speed is larger than a specified limit, for example trying to follow the master axis as fast as possible, stopping movement or invoking a defined robot function or the like.

According to another embodiment of the robot system according to the invention the robot controller is configured to control the position of the reference point along the predetermined movement path respectively trajectory so that the distance of the reference point from the path start position is increasing when the value of the control signal is increasing. Thus the dependency between control signal and movement of the reference point is defined so that the required dynamic of the robot movement is lowwhen the given dynamic of the course of the control signal is low. So it is ensured that the movement speed of the robot does not exceed a certain limit if the dynamic of the course of the control signal is limited.

According to another embodiment of the invention the robot controller is configured to control the position of the reference point arm along the predetermined movement path so that the reference point is at the path start position when the control signal value corresponds to its first limit and that the reference point is at the path end position when the control signal value corresponds to its second limit. In a further preferred embodiment the relationship in between the control signal and the robot movement along the predetermined movement path is linear so that a fully linear synchronization is gained.

According to another embodiment of the invention the source means for the master signal are configured to generate the master signal based on a mathematical function. This might be for example a sinusoidal function. Background for this embodiment is, that the master signal of the source means is not only provided to one, but also to at least a further robot or production device whose movement is dependent on the (same) control signal. So it is possible for example, that a sinusoidal signal controlling the up- and down movement of a press for example is additionally supplied to the input means of the robot. Thus a synchronized movement of the two or more robots or devices depending on this control signal is gained in an advantageous way without the need for a sensor determining the actual position of the master axis of the master device.

A sensor means can be used for the generation of the master signal. This might be required, if the movement of the master device is controlled in a purely mechanical way, for example by a rotating excentric causing an up- and down- movement of a press, so that no respective control signal is available.

According to another embodiment of the invention the position of the external movement axis at its first limit corresponds to the position of the reference point at the start position of the predetermined movement path and/or the position of the external movement axis at its second axis limit corresponds to the position of the reference point at the end position of the predetermined movement path. Thus the movement of the external master axis is preferably linearly assigned to the movement of the reference point along the predetermined movement path.

According to another embodiment of the invention the start and end positions of the predetermined movement path are identical, and source means are configured to generate a continuously increasing master signal and to set its value abruptly to the first value limit when reaching the second value limit. Background for this embodiment is that also periodical movements within a loop or as hysteresis are enabled therewith, wherein there is no backwards movement of the tip of the robot arm back along the same path. In other words a kind of hysteresis behavior is possible, so that for example the trajectory of a robot arm to a target has not necessarily to correspond to the trajectory back from the target.

Suitable source means for the generation of such a master signal could generate the master signal either based on a mathematical function or for example an angle sensor of a rotating disk or excentric. Not a suitable source means is for example a linear distance meter determining the actual gap in between the upper and lower part of a press, since no continuously increasing master signal is generated.

According to another embodiment of the invention the robot controller is foreseen to check, whether the robot arm is capable to perform the desired movement speed of its reference point along the predetermined movement path. Even each point of the predetermined movement path can be assumed to be reachable by the reference point, in case of a too high dynamic of the course of the control- respectively master signal the desired movement speed of the robot arm resulting therefrom might be higher than the robot arm is able to perform. In case of exceeding the admitted limits respective counteraction can be initiated, in the easiest case a stop of the robot system. Further actions could be:
- robot arm moves as fast as it can,
- robot arm stops on path,
- robot arm stops as fast as it can.

According to a further embodiment of the invention the robot system comprises at least a further robot respectively robot arm whose reference point is moveable along a further predetermined movement path dependent on the respective values of the same control-respectively master- signal. Thus a synchronization of the movements of two or more robots is enabled in an easy way by using a common master signal for synchronization.

Further advantageous embodiments of the invention are mentioned in the dependent claims.

The invention will now be further explained by means of an exemplary embodiment and with reference to the accompanying drawings, in which:
Figure 1 shows an exemplary control scheme of a robot system according to prior art,
Figure 2 shows an exemplary control scheme of a robot system according to the invention,
Figure 3 shows an exemplary robot system,
Figure 4 shows an a graph a control signal interconnected with predetermined movement path and
Figure 5 shows an external movement axis interconnected with predetermined movement path.

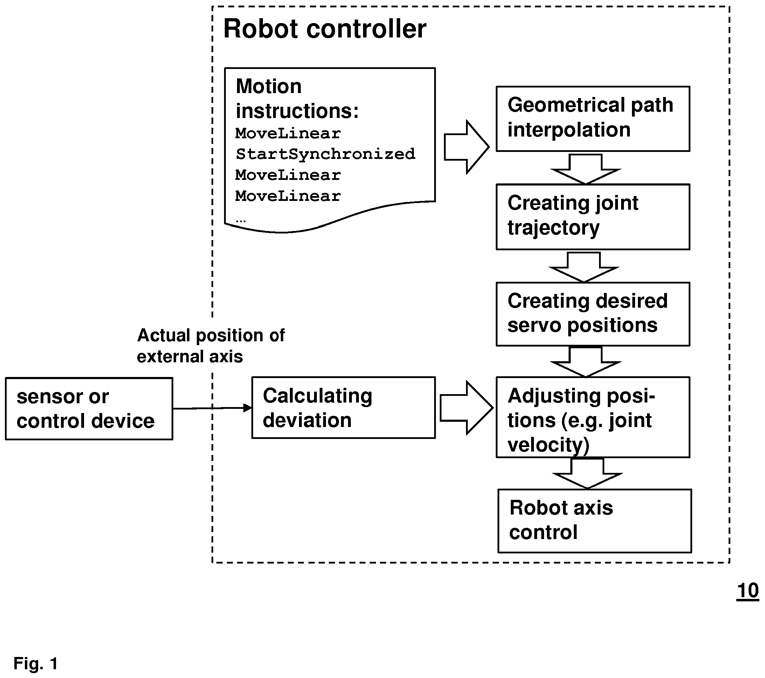

Figure 1 shows an exemplary control scheme of a robot system according to prior art in a sketch 10. A robot controller comprises a computing device with a robot program running thereon, which comprises motion instructions describing a predetermined movement path respectively trajectory. Based thereon the following steps are performed by the robot controller:
- Geometrical path interpolation. Typically the movement path is determined by a sequence of coordinates wherefrom the trajectory is derived of. Also a dynamic behavior of the robot is considered herby, for example a sharp edge in the trajectory which would arise when linear connecting the coordinates is rounded automatically.
- Creating joint trajectory. A robot respectively a robot arm comprises typically several members which are linked to a kinematic chain by respective joints, wherein each joint is driven by a dedicated servo motor. The end of the kinematic chain - the tip of the robot arm - is foreseen to perform a movement along the predetermined movement path. Thus each joint has to be operated according to a respective related joint trajectory, so that the end of the kinematic chain is moving as desired.
- Creating desired servo positions. Each servo motor has to be operated in that way that the joint related thereto is performing the respective desired joint trajectory.

While synchronizing the movement of the robot arm with an external axis, a sensor or control device is permanently providing the actual position of the axis to be synchronized with the robot controller, which determines, whether there is a deviation from the desired synchronized state or not.

In case of a deviation, the positions become adjusted, e.g. the joint velocity becomes slowed down respectively speeded up so that the synchronized state is achieved again.

Those temporarily adjusted positions become provided to the robot axis control which drives the servo motors accordingly, so that the synchronized state to the master axis is ensured.

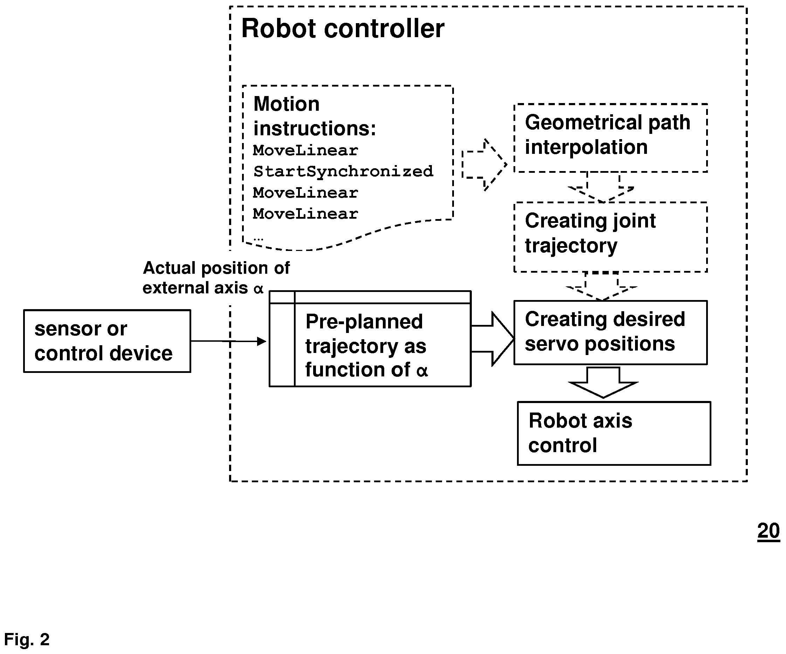

Figure 2 shows an exemplary control scheme of a robot system according to the invention in a sketch 20. In contrast to prior art there are no longer any motion instructions which have to become geometrically interpolated to define a movement path, wherefrom the joint trajectory is derived of.

Moreover, the actual position of the external axis, which might be provided by a sensor or control device, is directly provided is input for a function assigning each value of the control signal directly to a related position of the tip of the robot arm along the predetermined movement path. Such a function might be realized for example based on a look-up table, which is an extremely fast solution.

Having determined the desired position of the robot arm along the predetermined movement path, the desired respectively desired positions of the servo motors are derived therefrom and the robot joints are controlled accordingly.

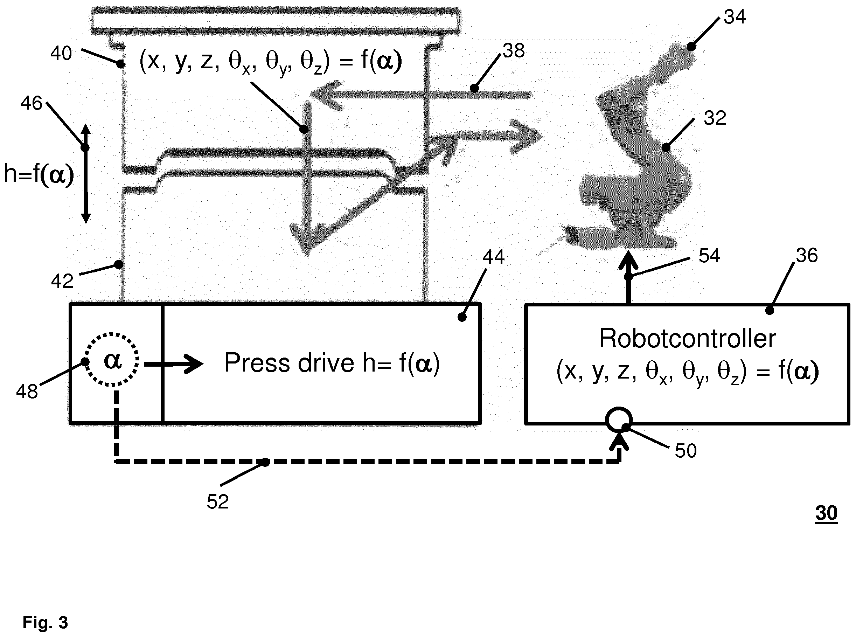

Figure 3 shows an exemplary robot system 30 in a schematic overview. A robot with a robot arm 32 and a tip 34 at its distal end is controlled by a robot controller 36. The robot arm 32 might have six degrees of freedom in movement and a total length of 2,5m. The robot controller 36 comprises as well a computing device as several power electronic based amplifiers for generating the driver signals for the respective servo motors of the joints of the robot arm 32.

The robot controller 36 is foreseen to control the movement of the tip 34 of the robot arm 32 along a predetermined movement path 38 between start and end positions dependent on the respective values of a control signal 52, which is provided to the robot controller 36 at input means 50. The respective positions along the predetermined movement path 38 include three coordinates x, y, z for the positioning as such as three further values Θx, Θy, Θz, for the orientation of the tip 34 of the robot arm 32. A not depicted function module is foreseen to assign each value of the control signal 52 in between a first and a second limit directly to a related position of the tip 34 of the robot arm 32 along the predetermined movement path 38.

The control signal 52 is provided by source means 48, in this case a signal generator for a sinusoidal signal which is basically foreseen to control a press drive 44 of a press with an upper 40 and lower 42 part, which are moving up and down against each other along an external movement axis 46.

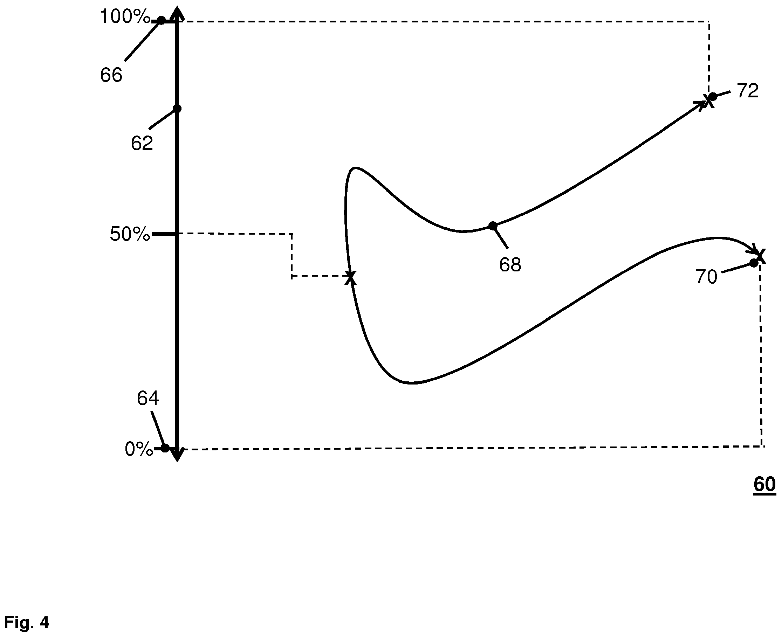

Figure 4 shows a schematic graph 60 with a control signal 62 interconnected with a predetermined movement path 68. The control signal 62 might represent values between a first limit 64 and a second limit 66. Dependent thereon a not depicted tip of a robot arm moves between a start position 70 and an end position 72 of the predetermined movement path 68.

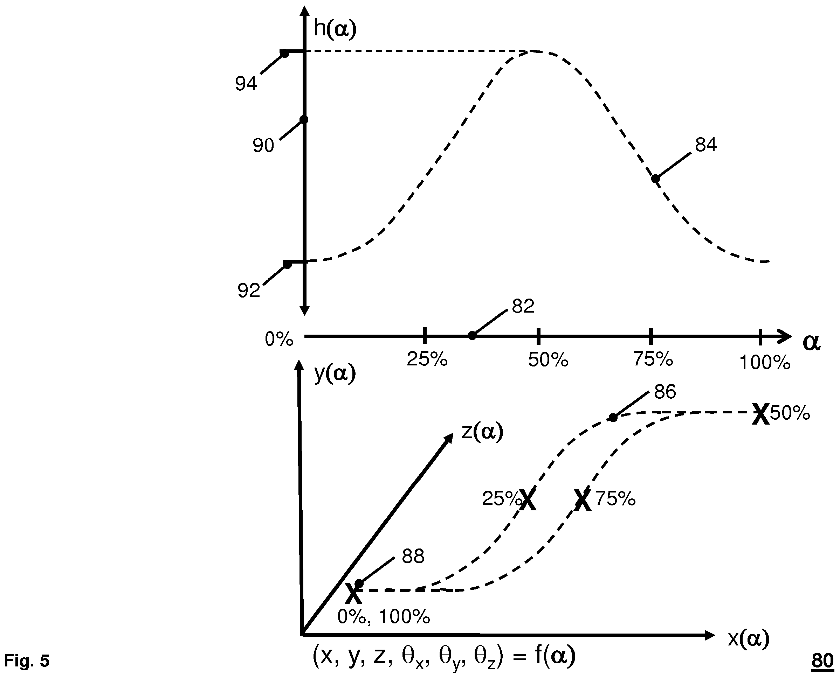

Figure 5 shows in a sketch 80 the course 84 of an external movement axis 90 which is indirectly interconnected with a predetermined movement path 86 since both are controlled by a common master signal 82. The external movement axis 90 describes a sinusoidal course 84 in between a first axis limit 92 and a second axis limit 94 dependent on the master signal 82 which rises from 0% to 100%. Also dependent on the master signal 82 the position of a not depicted tip of a robot arm moves along the hysteresis-like predetermined movement path 86 with common start and end positions 88. Thus it is possible to move repeatedly along the same hysteresis like predefined movement path several by continuously increasing the master signal 82 and automatically resetting it to 0% if it exceeds 100%.

### List of reference signs

10 exemplary control scheme of a robot system according to prior art
20 exemplary control scheme of a robot system according to the invention
30 exemplary robot system
32 robot arm
34 tip of robot arm
36 robot controller
38 predetermined movement path
40 upper part of press
42 lower part of press
44 press drive
46 external movement axis (of press)
48 source means
50 input means
52 control signal
54 connection to robot
60 control signal interconnected with predetermined movement path
62 control signal
64 first value limit
66 second value limit
68 predetermined movement path
70 start- position of predetermined movement path
72 end- position of predetermined movement path
80 external movement axis interconnected with predetermined movement path
82 master signal
84 course of external movement axis
86 predetermined movement path
88 common start- and end- position of predetermined movement path
90 external movement axis
92 first axis limit
94 second axis limit

## Claims

1. Robot system (30), comprising
• a robot arm (32) with a movable tip (34) and at least two degrees of freedom in movement,
• a robot controller (36) which is configured to control the movement of a reference point, which is one of the tip (34) of the robot arm (32) or the tool center point (TCP) of a tool mounted on the tip (34) of the robot arm (32), along a predetermined movement path (38, 68, 86) between a start position (70) and an end (72) position,
• a device with an external movement axis (46, 90) which is movable between a first (92) and a second (94) axis limit and sensor means for determining the position of the external movement axis (46, 90),
• wherein the robot controller (36) comprises input means (50) for a control signal (52, 62) which represents values in between a first (64) and a second (66) signal limit,
• wherein the robot controller (36) is configured to assign each value of the control signal (52, 62) to a related position of the reference point along the predetermined movement path (38, 68, 86) and
• wherein the robot controller (36) is configured to control the movement of the reference point along the predetermined movement path (38, 68, 86) dependent on the respective values of the control signal (52, 62),
**characterized in that**
it further comprises
• source means (48) configured to generate a master signal in such a way that it describes consecutive positions of the external movement axis (46, 90) with consecutive values between first (92) and second (94) axis limits, and to supply said master signal to the input means (50) as said control signal (52),
so that the movement of the reference point along the predetermined movement path (38, 68, 86) is interconnected with the actual position of the external movement axis (46, 90).

2. Robot system according to claim 1, **characterized in that** the robot controller (36) is configured to control the position of the reference point along the predetermined movement path (38, 68, 86) in such a way that the distance of the reference point from the start position (70) is increasing when the value of the control signal (52, 62) is increasing.

3. Robot system according to claim 2, **characterized in that** the robot controller (36) is configured to control the position of the reference point along the predetermined movement path (38, 68, 86) in such a way that the reference point (34) is at the start position (70) when the value of the control signal (52, 62) corresponds to its first limit (64) and that the tip (34) is at the end position (72) when the value of the control signal (52, 62) corresponds to its second limit (66).

4. Robot system according to any of the previous claims, **characterized in that** the source means (48) for the master signal are configured to generate the master signal based on a mathematical function.

5. Robot system according to any of the previous claims, **characterized in that** the position of the external movement axis (46, 90) at its first limit (92) corresponds to the position of the reference point at the start position (70) of the predetermined movement path (38, 68, 86) and/or **in that** the position of the external movement axis (46, 90) at its second axis limit (72) corresponds to the position of the reference point at the end position (72) of the predetermined movement path (38, 68, 86).

6. Robot system according to any of the previous claims, **characterized in that** the start (70) and end (72) positions of the predetermined movement path (38, 68, 86) are identical (88), **in that** the source means (48) are configured to generate the master signal as a continuously increasing master signal and to set its value abruptly to the first limit when reaching the second limit.

7. Robot system according to any of the previous claims, **characterized in that** the robot controller (36) is configured to check whether the robot arm (32) is capable to perform the desired movement speed of its tip (34) along the predetermined movement path (38, 68, 86).

8. Robot system according to any of the previous claims, **characterized in that** the robot system (30) comprises at least a further robot arm (32) whose reference point is moveable along a further predetermined movement path (38, 68, 86) dependent on the respective values of the same control- respectively master signal.

## Patentansprüche

1. Robotersystem (30), umfassend
- einen Roboterarm (32) mit einer beweglichen Spitze (34) und mindestens zwei Bewegungsfreiheitsgraden,
- eine Robotersteuerung (36), die vorgesehen ist, um die Bewegung eines Referenzpunktes, der entweder die Spitze (34) des Roboterarms (32) oder der Werkzeugmittelpunkt (TCP) eines an der Spitze (34) des Roboterarms (32) montierten Werkzeugs ist, entlang einer vorgegebenen Bewegungsbahn (38, 68, 86) zwischen einer Startposition (70) und einer Endposition (72) zu steuern,
- eine Vorrichtung mit einer externen Bewegungsachse (46, 90), die zwischen einer ersten (92) und einer zweiten (94) Achsengrenze beweglich ist, und Sensormitteln zur Bestimmung der Position der externen Bewegungsachse (46, 90),
- wobei die Robotersteuerung (36) eine Eingabeeinrichtung (50) für ein Steuersignal (52, 62) umfasst, das Werte zwischen einer ersten (64) und einer zweiten (66) Signalgrenze darstellt,
- wobei die Robotersteuerung (36) konfiguriert ist, um jeden Wert des Steuersignals (52, 62) einer entsprechenden Position des Referenzpunktes entlang der vorgegebenen Bewegungsbahn (38, 68, 86) zuzuordnen, und
- wobei die Robotersteuerung (36) konfiguriert ist, um die Bewegung des Referenzpunktes entlang der vorgegebenen Bewegungsbahn (38, 68, 86) in Abhängigkeit von den jeweiligen Werten des Steuersignals (52, 62) zu steuern,
**dadurch gekennzeichnet, dass** es ferner umfasst
- eine Quelleneinrichtung (48), die konfiguriert ist, um ein Hauptsignal in einer solchen Weise zu erzeugen, dass es aufeinanderfolgende Positionen der externen Bewegungsachse (46, 90) mit aufeinanderfolgenden Werten zwischen einer ersten (92) und einer zweiten (94) Achsengrenze beschreibt, und um das Hauptsignal als das Steuersignal (52) an die Eingabeeinrichtung (50) so zu liefern, dass die Bewegung des Referenzpunkts entlang des vorgegebenen Bewegungspfads (38, 68, 86) mit der tatsächlichen Position der externen Bewegungsachse (46, 90) verknüpft ist.

2. Robotersystem nach Anspruch 1 , **dadurch gekennzeichnet, dass** die Robotersteuerung (36) konfiguriert ist, um die Position des Referenzpunktes entlang der vorgegebenen Bewegungsbahn (38, 68, 86) so zu steuern, dass der Abstand des Referenzpunktes von der Startposition (70) zunimmt, wenn der Wert des Steuersignals (52, 62) zunimmt.

3. Robotersystem nach Anspruch 2, **dadurch gekennzeichnet, dass** die Robotersteuerung (36) konfiguriert ist, die Position des Referenzpunktes entlang der vorgegebenen Bewegungsbahn (38, 68, 86) so zu steuern, dass sich der Referenzpunkt (34) an der Startposition (70) befindet, wenn der Wert des Steuersignals (52, 62) seiner ersten Grenze (64) entspricht, und dass sich die Spitze (34) in der Endposition (72) befindet, wenn der Wert des Steuersignals (52, 62) seiner zweiten Grenze (66) entspricht.

4. Robotersystem nach einem der vorhergehenden Ansprüche, **dadurch gekennzeichnet, dass** die Quelleneinrichtung (48) für das Hauptsignal konfiguriert ist, um das Hauptsignal auf der Grundlage einer mathematischen Funktion zu erzeugen.

5. Robotersystem nach einem der vorhergehenden Ansprüche, **dadurch gekennzeichnet, dass** die Position der externen Bewegungsachse (46, 90) an ihrer ersten Grenze (92) der Position des Referenzpunktes an der Startposition (70) der vorgegebenen Bewegungsbahn (38, 68, 86) entspricht und/oder dass die Position der externen Bewegungsachse (46, 90) an ihrer zweiten Achsengrenze (72) der Position des Referenzpunktes an der Endposition (72) der vorgegebenen Bewegungsbahn (38, 68, 86) entspricht.

6. Robotersystem nach einem der vorhergehenden Ansprüche, **dadurch gekennzeichnet, dass** die Start- (70) und die Endposition (72) der vorgegebenen Bewegungsbahn (38, 68, 86) identisch sind (88), dass die Quelleneinrichtung (48) konfiguriert ist, das Hauptsignal als kontinuierlich ansteigendes Hauptsignal zu erzeugen und dessen Wert bei Erreichen der zweiten Grenze sprunghaft auf die erste Grenze zu setzen.

7. Robotersystem nach einem der vorhergehenden Ansprüche, **dadurch gekennzeichnet, dass** die Robotersteuerung (36) konfiguriert ist, um zu überprüfen, ob der Roboterarm (32) in der Lage ist, die gewünschte Bewegungsgeschwindigkeit seiner Spitze (34) entlang der vorgegebenen Bewegungsbahn (38, 68, 86) auszuführen.

8. Robotersystem nach einem der vorhergehenden Ansprüche, **dadurch gekennzeichnet, dass** das Robotersystem (30) mindestens einen weiteren Roboterarm (32) umfasst, dessen Referenzpunkt in Abhängigkeit von den jeweiligen Werten desselben Steuer- bzw. Hauptsignals entlang einer weiteren vorgegebenen Bewegungsbahn (38, 68, 86) bewegbar ist.

## Revendications

1. Système de robot (30), comprenant
- un bras de robot (32) avec une pointe mobile (34) et au moins deux degrés de liberté dans le mouvement,
- un dispositif de commande de robot (36) qui est configuré pour commander le mouvement d'un point de référence, qui est l'un de la pointe (34) du bras de robot (32) ou du point central d'outil (TCP) d'un outil monté sur la pointe (34) du bras de robot (32), le long d'un trajet de mouvement prédéterminé (38, 68, 86) entre une position de départ (70) et une position finale (72),
- un dispositif ayant un axe de mouvement externe (46, 90) qui est mobile entre une première (92) et une seconde (94) limite d'axe et des moyens de détection pour déterminer la position de l'axe de mouvement externe (46, 90),
- dans lequel le dispositif de commande de robot (36) comprend des moyens d'entrée (50) pour un signal de commande (52, 62) qui représente des valeurs comprises entre une première (64) et une deuxième (66) limites de signal,
- dans lequel le dispositif de commande de robot (36) est configuré pour affecter chaque valeur du signal de commande (52, 62) à une position associée du point de référence le long du trajet de mouvement prédéterminé (38, 68, 86) et
- dans lequel le dispositif de commande de robot (36) est configuré pour commander le mouvement du point de référence le long du trajet de mouvement prédéterminé (38, 68, 86) en fonction des valeurs respectives du signal de commande (52, 62), **caractérisé en ce qu'**il comprend en outre
- des moyens de source (48) configurés pour générer un signal maître de telle sorte qu'il décrive des positions consécutives de l'axe de mouvement externe (46, 90) par des valeurs consécutives entre les première (92) et seconde (94) limites d'axe, et pour fournir ledit signal maître aux moyens d'entrée (50) en tant que ledit signal de commande (52), de sorte que le mouvement du point de référence le long du trajet de mouvement prédéterminé (38, 68, 86) est relié à la position réelle de l'axe de mouvement externe (46, 90).

2. Système de robot selon la revendication 1, **caractérisé en ce que** le dispositif de commande de robot (36) est configuré pour commander la position du point de référence le long du trajet de mouvement prédéterminé (38, 68, 86) de telle sorte que la distance du point de référence par rapport à la position de départ (70) augmente lorsque la valeur du signal de commande (52, 62) augmente.

3. Système de robot selon la revendication 2, **caractérisé en ce que** le dispositif de commande de robot (36) est configuré pour commander la position du point de référence le long du trajet de mouvement prédéterminé (38, 68, 86) de telle sorte que le point de référence (34) est à la position de départ (70) lorsque la valeur du signal de commande (52, 62) correspond à sa première limite (64) et que la pointe (34) est à la position d'extrémité (72) lorsque la valeur du signal de commande (52, 62) correspond à sa deuxième limite (66).

4. Système de robot selon l'une quelconque des revendications précédentes, **caractérisé en ce que** les moyens de source (48) du signal maître sont configurés pour générer le signal maître sur la base d'une fonction mathématique.

5. Système de robot selon l'une quelconque des revendications précédentes, **caractérisé en ce que** la position de l'axe de mouvement externe (46, 90) à sa première limite (92) correspond à la position du point de référence à la position de début (70) du trajet de mouvement prédéterminé (38, 68, 86) et/ou **en ce que** la position de l'axe de mouvement externe (46, 90) à sa deuxième limite d'axe (72) correspond à la position du point de référence à la position de fin (72) du trajet de mouvement prédéterminé (38, 68, 86).

6. Système de robot selon l'une quelconque des revendications précédentes, **caractérisé en ce que** les positions de début (70) et de fin (72) du trajet de mouvement prédéterminé (38, 68, 86) sont identiques (88), **en ce que** les moyens de source (48) sont configurés pour générer le signal maître sous la forme d'un signal maître à croissance continue et pour régler brusquement sa valeur sur la première limite lorsqu'il atteint la deuxième limite.

7. Système de robot selon l'une quelconque des revendications précédentes, **caractérisé en ce que** le dispositif de commande de robot (36) est configuré pour vérifier si le bras de robot (32) est capable d'effectuer la vitesse de mouvement souhaitée de sa pointe (34) le long du trajet de mouvement prédéterminé (38, 68, 86).

8. Système de robot selon l'une quelconque des revendications précédentes, **caractérisé en ce que** le système de robot (30) comprend au moins un deuxième bras de robot (32) dont le point de référence est déplaçable le long d'un autre trajet de mouvement prédéterminé (38, 68, 86) en fonction des valeurs respectives du même signal de commande ou maître.
